Europäisches Patentamt

European Patent Office

Office européen des brevets

(11) Numéro de publication: **0 384 805**
**A1**

# DEMANDE DE BREVET EUROPEEN

(21) Numéro de dépôt: 90400384.5

(22) Date de dépôt: 13.02.90

(51) Int. Cl.⁵ **F16H 21/44**

(30) Priorité: 22.02.89 FR 8902283

(43) Date de publication de la demande:
29.08.90 Bulletin 90/35

(84) Etats contractants désignés:
BE CH DE ES GB IT LI

(71) Demandeur: **ATELIERS ELECTRIQUES ET METALLURGIQUES DU LOIRET**
**Rue de Chenevières**
**F-45130 Meung-Sur-Loire(FR)**

(72) Inventeur: **Hazotte, Daniel**
**131 rue des Frênes**
**F-45400 Saran(FR)**

(74) Mandataire: **Chevallier, Robert Marie Georges et al**
**Cabinet BOETTCHER 23, rue La Boétie**
**F-75008 Paris(FR)**

(54) Mécanisme à mouvements circulaires alternatifs et à limites précises d'arrêt.

(57) L'arbre mené (11) et l'arbre moteur (6) coopérent cinématiquement par un bras de levier (7) muni d'un doigt (8) et par un bras de manivelle (9) ayant une fente radiale (10) dans laquelle coulisse le doigt (8) pendant l'exécution de courses circulaires alternées d'une amplitude de 270° de l'arbre moteur (6), ces arbres (11, 6) étant espacés d'une distance (L) et le bras de levier (7) ayant une longueur L/√2 de sorte que ces deux bras (7, 9) sont perpendiculaires l'un à l'autre à chaque arrêt positif de fin de course défini par la rencontre du doigt (8) avec une butée (15) fixée dans la fente (10).

Fig. 3

EP 0 384 805 A1

## Mécanisme à mouvements circulaires alternatifs et à limites précises d'arrêt.

L'invention se rapporte à un mécanisme de transmission d'un mouvement circulaire alternatif d'un premier arbre à un second arbre, ce second arbre étant entraîné pour exécuter aussi un mouvement circulaire alternatif : ce mécanisme a des limites précises d'arrêt aux extrémités de la course du premier arbre et, pour une course d'une valeur déterminée de cet arbre, il se produit une immobilisation ferme du second arbre par le premier arbre tant que celui-ci n'est pas remis en mouvement.

On connaît déjà un mécanisme de transformation d'un mouvement circulaire alternatif d'un premier arbre en un mouvement circulaire alternatif d'un second arbre ; ce mécanisme comprend, sur le premier arbre, un bras de levier s'étendant radialement et muni à son extrémité libre d'un doigt parallèle à ce premier arbre ; sur le second arbre est calé un bras de manivelle s'étendant radialement et ayant une fente allongée en sens radial dans laquelle est engagé librement le doigt associé au premier arbre. Ainsi, les oscillations alternatives du premier arbre sont transmises par le doigt au bras de manivelle dans lequel ce doigt peut coulisser pendant les mouvements alternés du premier arbre, et ces oscillations sont transmises finalement au second arbre. Le sens de la transmission du mouvement peut être inversé si on le désire, les oscillations du second arbre faisant alors osciller le premier arbre.

Ce mécanisme connu est conçu uniquement pour la transmission ininterrompue d'un mouvement circulaire alternatif. L'arrêt de l'arbre moteur a bien pour conséquence l'arrêt du mouvement, mais cet arrêt n'a pas lieu à une position relative définie des deux arbres ; au moment de l'arrêt, le bras de manivelle et le bras de levier font entre eux un angle quelconque qui ne se reproduit pas à chaque arrêt. De plus, quand les deux arbres sont à l'arrêt, il ne se produit pas non plus de blocage à une position déterminée de l'un des arbres par l'autre de ces arbres.

L'invention a pour but principal de parvenir à un mécanisme du type décrit ci-dessus perfectionné de façon telle que l'arrêt de l'arbre moteur a lieu à une position précise aux extrémités de sa course alternative ; selon un but secondaire de l'invention, quand cette course alternative de l'arbre moteur est de 270°, l'arrêt de l'arbre moteur s'accompagne d'une immobilisation ferme en rotation de l'arbre mené par cet arbre moteur.

Le but principal de l'invention est atteint quand, dans un mécanisme comprenant sur un arbre moteur un bras de levier radial muni à son extrémité libre d'un doigt dirigé parallèlement à cet arbre moteur, sur un arbre mené un bras de manivelle radial ayant une fente allongée radiale dans laquelle est engagé libre en coulissement le doigt associé à l'arbre moteur, ce dernier étant accouplé à un organe moteur pour exécuter des courses circulaires alternatives d'amplitude inférieure à 360°, selon l'invention il est prévu dans la fente allongée une butée solidement fixée pour arrêter positivement le doigt coulissant dans cette fente exactement à la fin de la course circulaire de l'arbre moteur, en même temps qu'il est prévu un moyen de coupure de l'alimentation en énergie de cet organe moteur en relation avec la position du même arbre moteur approchant de ladite fin de sa course.

Dans certaines circonstances, principalement quand l'arbre mené entraîne dans ses mouvements un élément à grande inertie, il est préférable d'ajouter au mécanisme un moyen de freinage ou d'amortissement du mouvement disposé pour agir sur le mécanisme dans le sens du ralentissement juste avant la rencontre de la butée par le doigt.

Le but secondaire mentionné plus haut est atteint avec un mécanisme tel que défini ci-dessus quand à l'une au moins des deux fins de course de l'arbre moteur, le bras de levier est arrêté par le contact du doigt et de la butée à une position à laquelle il est perpendiculaire au bras de manivelle A cette position l'arbre mené ne peut plus tourner ni dans un sens ni dans le sens opposé, il est immobilisé fermement en rotation, sous réserve du jeu nécessaire au coulissement du doigt dans la fente allongée.

En général, les courses circulaires alternatives des deux arbres et des deux bras sont exécutées symétriquement de part et d'autre du plan passant par les axes géométriques de ces deux arbres ; en outre, de préférence les deux arbres sont parallèles l'un à l'autre et séparés par une distance L.

Dans ce cas la même butée fermement fixée dans la fente allongée sert à arrêter le doigt associé à l'arbre moteur, avec précision, à chacune des deux fins de course de chaque mouvement de l'arbre moteur.

Lorsque la longueur utile du bras de levier, qui est définie plus loin, est égale à $L/\sqrt{2}$, ce bras de levier est perpendiculaire au bras de manivelle à chacune des deux positions d'arrêt de fin de course de l'arbre moteur, de sorte que l'arbre mené est immobilisé en rotation à chacune des deux positions d'arrêt.

On donnera maintenant une description d'un exemple particulier de réalisation de l'invention sans intention d'en limiter la portée Au cours de cette description, on se reportera aux dessins annexés dans lesquels :

- la figure 1 est une vue générale en perspective d'un mécanisme selon l'invention installé à l'intérieur d'une enveloppe générale de protection,

- la figure 2 est une vue en coupe par un plan passant par les axes géométriques de l'arbre moteur et de l'arbre mené, qui sont parallèles du mécanisme,

- la figure 3 est une vue partielle en coupe selon III-III de la figure 2, dont le rôle est de montrer, en vue de dessus, le mécanisme des figures 1 et 2.

L'exemple de réalisation décrit ici est particulier en ce sens que le mécanisme de l'invention est incorporé à un appareil dont la fonction est de présenter un tableau vertical de grandes dimensions alternativement à deux positions situées à 90° l'une par rapport à l'autre, avec un temps d'arrêt prédéterminé et de durée réglable à chacune de ces deux positions, ces durées peuvent être identiques ou différentes. Ce tableau peut être, par exemple, un support de mire pour le tir, un support d'affiche publicitaire ou d'informations, un présentoir d'articles offerts à la vente, etc....

Du fait du moment d'inertie important de ce genre de tableau vertical et de la nécessité de l'arrêter de manière nette, sans vibration, sans rebond à chacune des deux positions et de l'immobiliser fermement pendant la durée de chaque arrêt, le mécanisme comporte l'emploi de l'ensemble des caractéristiques prévues par l'invention.

Un bâti porteur 1 protégé par une enveloppe générale extérieure 2 porte comme organe moteur un moteur électrique 3 alimenté en courant électrique à partir d'une batterie d'accumulateurs 4 abritée par l'enveloppe générale 2 ; entre la batterie 4 et et le moteur 3 se trouve un circuit électrique (non représenté) de commande, de contrôle et de réglage, connu en soi.

Le moteur électrique 3 est complété par un réducteur de vitesse 5 qui a un arbre de sortie 6 disposé verticalement en position d'utilisation de l'appareil. Cet arbre 6 est l'arbre moteur du mécanisme de l'invention ; il porte un bras de levier 7 qui y est calé en rotation par l'une de ses extrémités et qui s'étend radialement dans un plan horizontal pour porter à son extrémité libre un doigt vertical 8. Ce doigt 8 est engagé,de façon à pouvoir y coulisser librement, dans une fente allongée prévue dans un bras de manivelle 9 disposé dans un plan horizontal. En pratique ce bras de manivelle 9 est réalisé comme un diapason, avec deux branches parallèles limitant entre elles une fente allongée 10.

Le bras de manivelle 10 s'étend radialement par rapport à un arbre 11 sur lequel il est calé en rotation dans une de ses parties extrêmes. Cet arbre 11 est disposé verticalement en position d'utilisation de l'appareil et guidé dans un palier 12 que porte le bâti 1.

L'arbre 11 est l'arbre mené du dispositif de l'invention ; il a une partie extrême supérieure en saillie au-dessus de l'enveloppe générale 2. Dans cette partie extrême supérieure est prévue une entaille diamétrale 13 dans laquelle il est possible d'engager et de fixer un tableau ou un panneau ou un article analogue (non représenté) à faire osciller.

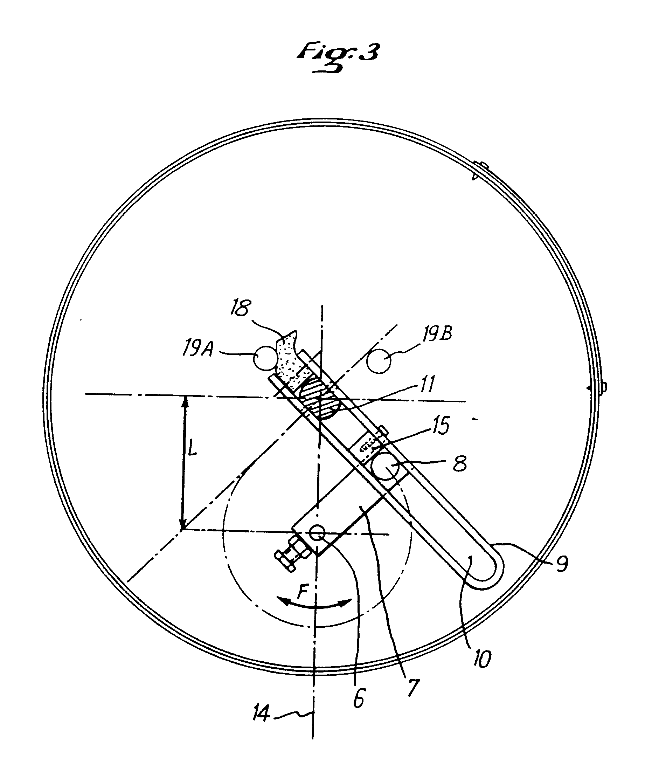

L'arbre moteur 6 et l'arbre mené 11 sont parallèles, espacés d'une distance L entre leurs axes géométriques ; les oscillations de l'arbre moteur 8 et, par conséquent, celles de l'arbre mené 8 se font symétriquement de part et d'autre du plan vertical, indiqué sur la figure 3 par un trait mixte 14, qui passe par les axes géométriques des deux arbres 6, 7.

L'arbre moteur 6 exécute un mouvement circulaire alternatif sous le contrôle d'un micro-processeur (non représenté) programmé convenablement pour déclencher au moment voulu et dans le sens voulu l'alimentation du moteur électrique 3, après une période d'arrêt prédéterminée et réglable, à chaque position d'arrêt, c'est-à-dire à chaque fin de course. Il est donc facile à comprendre que l'amplitude de la course alternative et la situation symétrique ou non des extrémités de la course peuvent être choisies à volonté, selon les conditions envisagées d'emploi de l'appareil équipé du mécanisme de l'invention.

Dans le présent exemple le mouvement circulaire alternatif de l'arbre moteur 6 et, donc, du bras de levier 7, a une amplitude de 270°, comme indiqué par une flèche double F sur la figure 3. Comme les positions d'arrêt sont symétriques par rapport au plan 14, une seule butée 15 solidement fixée au bras de manivelle 9 à l'intérieur de la fente 10 peut servir de moyen positif d'arrêt du mouvement à chacune des deux fins de course du doigt 8 coulissant dans la fente 10.

Comme en plus, dans cet exemple, la longueur utile du bras de levier 7, entre l'axe géométrique de l'arbre moteur 6 et l'axe géométrique du doigt 8, est égale à $L/\sqrt{2}$, de même que la distance existante entre l'axe géométrique de l'arbre mené 11 et l'axe géométrique du doigt 8 quand celui-ci est appliqué contre la butée 15, il en résulte que, à chacune des positions d'arrêt en fin de course, comme représenté sur la figure 3 pour l'une seulement de ces positions, le bras de levier 7 est perpendiculaire au bras de manivelle 9. Ce dernier est donc positivement immobilisé en rotation avec l'arbre mené 11, et avec le tableau ou le panneau ou l'objet analogue fixé à ce dernier, au jeu de fonctionnement près qui est prévu pour le coulissement du doigt 8 à l'intérieur de la fente allongée 10.

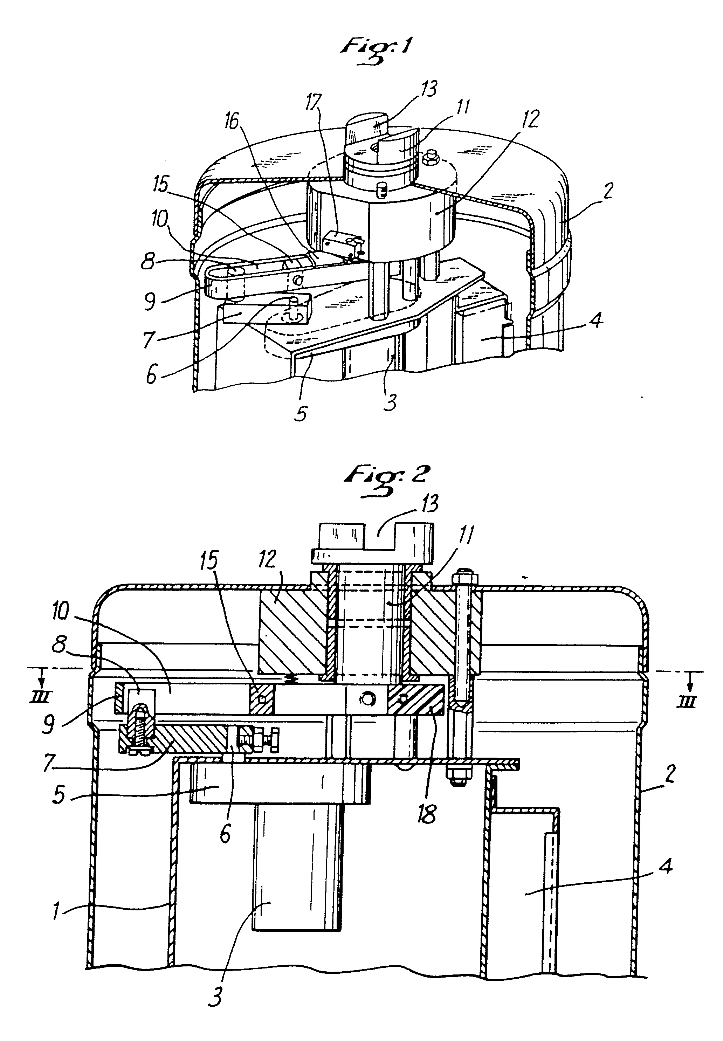

Bien entendu, au moment où la position de fin de course est atteinte, le moteur électrique 3 doit cesser de fournir un couple moteur. Une plaquette 16 (représentée sur la figure 1 seulement) est fixée sur la tranche supérieure des deux branches parallèles du bras de manivelle 9 de façon à manoeuvrer l'élément mobile d'un micro-interrupteur 17 de fin de course fixé convenablement au palier 12. Il existe deux micro-interrupteurs de fin de course disposés symétriquement.

La manoeuvre en alternance de chacun des micro-interrupteurs 17 provoque la génération d'un signal qui déclenche l'arrêt de l'alimentation électrique du moteur 3, le comptage d'une durée d'arrêt, l'inversion du sens d'alimentation électrique du moteur 3 pour que, à la fin de la durée d'arrêt, le moteur 3 tourne en sens inverse. D'autres moyens équivalents pourraient servir à assurer ces fonctions.

Chaque micro-interrupteur 17 est mis à une position avancée par rapport à l'instant du contact entre le doigt 8 et la butée 15 de sorte que le réducteur 5 et le moteur 3 ne fournissent plus de couple moteur avant la fin de la course et produisent un effet de ralentissement du mouvement. Dans de nombreuses circonstances, le réglage de l'instant de la manoeuvre du micro-interrupteur 17 peut être suffisant à procurer un ralentissement tel que le doigt 8 "vient mourir" contre la butée 15 juste à la fin de la course, ce qui évite tout rebond.

Dans le présent exemple, le bras de manivelle 9 s'étend au-delà de l'arbre mené 11 et un bloc 18 (figures 2 et 3), déformable élastiquement, en élastomère, y est fixé fermement. Ce bloc 18 a une partie extrême saillante destinée à rencontrer, à chaque fin de course, une butée 19A, 19B. Celles-ci sont disposées pour qu'un effet de freinage et d'amortissement du mouvement se produise quand l'énergie cinétique de l'ensemble mobile, notamment du tableau ou du panneau déplacé, est importante et ne permettrait pas sans risque d'endommagement la rencontre du doigt 8 et de la butée 15 en l'absence d'un freinage préalable du mouvement avant la fin de la course.

Le freinage et l'amortissement du mouvement peuvent être réalisés à l'aide d'autres moyens équivalents. Par exemple, les butées 19A, 19B pourraient être elles-mêmes déformables élastiquement et placées pour être rencontrées directement par l'un ou l'autre des deux bras 7 ou 9 arrivant à la fin de sa course. Il serait possible aussi de prévoir sur la butée 15 un élément s'effaçant élastiquement en étant rencontré par le doigt 8 avant que celui-ci soit arrêté positivement par le corps rigide de cette butée 15.

Le fonctionnement de l'appareil a déjà été expliqué plus haut. Sous l'effet du moteur électrique 3 à sens de rotation alternés, l'arbre mené 11 exécute des oscillations d'une amplitude de 90° entre deux positions extrêmes à chacune desquelles il est fermement immobilisé en rotation par le bras de levier 7 qui est alors perpendiculaire au bras de manivelle 9 à la fin de chacune de ses courses dont l'amplitude est de 270°.

## Revendications

1. Mécanisme de transformation d'un mouvement circulaire alternatif d'un arbre moteur (6) entraîné par un organe moteur (3, 5) en sens alternés le long de courses d'amplitude inférieure à 360° en un mouvement circulaire alternatif d'un arbre mené (11), comprenant un bras de levier (7) radial calé à une extrémité sur l'arbre moteur (6) et muni à son extrémité libre opposée d'un doigt (8), un bras de manivelle (9) radial calé à une extrémité sur l'arbre mené (11) et ayant une fente (10) allongée en sens radial dans laquelle est engagé libre en coulissement le doigt (8) du bras de levier (7), caractérisé en ce qu'il est prévu dans la fente allongée (10) une butée (15) solidement fixée pour arrêter positivement le doigt (8) coulissant dans cette fente exactement à la fin de la course de l'arbre moteur (6), en même temps qu'il est prévu un moyen de coupure de l'alimentation en énergie dudit organe moteur (3, 5) en relation avec la position du même arbre moteur (6) approchant de ladite fin de sa course.

2. Mécanisme selon la revendication 1 caractérisé en ce qu'il comprend en plus un moyen de freinage et d'amortissement (18, 19A, 19B), disposé pour agir sur le mécanisme dans le sens du ralentissement juste avant la rencontre de la butée (15) par le doigt (8).

3. Mécanisme selon la revendication 1 caractérisé en ce que, à la position d'arrêt à l'une des deux fins de course de l'arbre moteur (6) quand le bras de levier (7) est arrêté par le contact du doigt (8) avec la butée (15), ce bras de levier (7) est perpendiculaire au bras de manivelle (9).

4. Mécanisme selon la revendication 1 caractérisé en ce que les arbres moteur (6) et mené (11) sont parallèles avec un espacement d'une distance L entre leurs axes géométriques et les courses circulaires alternatives de ces deux arbres (6, 11) et des deux bras (bras de levier 7 et bras de manivelle 9) sont exécutées symétriquement de part et d'autre du plan (14) passant par les axes géométriques de ces deux arbres (6, 11) et la butée (15) arrête positivement le doigt (8) à l'une et à l'autre des deux fins de course de l'arbre moteur (6).

5. Mécanisme selon les revendications 3 et 4 réunies caractérisé en ce que la longueur utile du bras de levier (7) entre l'axe géométrique de l'arbre moteur (6) et l'axe géométrique du doigt (8) est égale à $L/\sqrt{2}$, et l'emplitude de la course de l'arbre moteur (6) est de 270°, de sorte que les deux bras (7, 9) sont perpendiculaires l'un à l'autre à chacune des positions d'arrêt aux deux fins de course dudit arbre moteur (6).

6. Mécanisme selon l'une quelconque des revendications 2 à 5 caractérisé en ce qu'il comprend pour assurer le freinage du mouvement avant le contact du doigt (8) avec la butée (15), un bloc élastique (18) et une butée (19A,19B) disposée pour être rencontrée par ce bloc élastique (18) peu avant l'arrêt positif du doigt (8) par la butée (15)

7. Mécanisme selon la revendication 6 caractérisé en ce que le bras de manivelle (9) est prolongé au-delà de l'arbre mené (11) et il est pourvu à l'extrémité de ce prolongement dudit bloc élastique (18).

Fig. 1

Fig. 2

## Fig. 3

**Office européen des brevets**

**RAPPORT DE RECHERCHE EUROPEENNE**

Numero de la demande

EP 90 40 0384

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | LA MACHINE MODERNE, vol. 57, no. 657, décembre 1963, page 48; P.W. JENSEN: "Une tringlerie simple remplace trois engrenages" * En entier * --- | 1,4 | F 16 H 21/44 |
| A | DE-C- 458 676 (LOESCH) * Page 2, lignes 4-22; figures 1,2 * ----- | 1 | |

DOMAINES TECHNIQUES RECHERCHES (Int. Cl.5)

F 16 H

Le présent rapport a été établi pour toutes les revendications

| Lieu de la recherche | Date d'achèvement de la recherche | Examinateur |
|---|---|---|
| LA HAYE | 07-05-1990 | FLODSTROEM J.B. |